# EUROPEAN PATENT SPECIFICATION

(11) **EP 2 939 514 B1**
(45) Date of publication and mention of the grant of the patent: **05.09.2018**
(21) Application number: 14177835.7
(22) Date of filing: 21.07.2014
(51) Int. Cl.: A01D 34/00, G05D 1/02

(54) **Lawn mower robot and control method thereof**
Rasenmähroboter und Steuerungsverfahren dafür
Robot pour tondre le gazon et son procédé de commande

(30) Priority: 30.04.2014 KR 20140052428; 23.05.2014 KR 20140062494
(43) Date of publication of application: 04.11.2015
(60) Divisional application: 18185040.5
(73) Proprietor: LG Electronics Inc., Youngdungpo-gu Seoul 150-721 (KR)
(72) Inventor: Nam, Dongkyun, 153-802 Seoul (KR); Song, Hyunsup, 153-802 Seoul (KR); Kim, Dongseong, 153-802 Seoul (KR)
(74) Representative: Vossius & Partner Patentanwälte Rechtsanwälte mbB

(56) References cited:
- EP-A1- 1 025 472
- EP-A1- 2 684 438
- US-A- 5 931 876

## Description

The present invention relates to a lawn mower robot and a control method thereof and more particularly, to a lawn mower robot which may accurately acquire distance information of a boundary wire at the inside of the boundary wire and a control method thereof.

In general, lawn mowers are apparatuses to mow a lawn planted in a yard of a home or on a playground. Such lawn mowers may be divided into lawn mowers for homes and lawn mowers for tractors used on farms.

Further, there are a walk behind type lawn mower pushed by a user behind the lawn mower to mow a lawn and a hand type lawn mower portable by a user.

However, both types of lawn mowers are operated directly by users and thus cause inconvenience.

Particularly, since it is difficult for modern people themselves to mow a lawn in a yard using lawn mowers, people generally hire a worker to mow the lawn and thus labor costs are inevitably generated.

Therefore, automatic robot type lawn mowers to prevent such additional costs and reduce labor have been developed. Various research into mobility control of automatic robot type lawn mowers has been performed. EP 2684438 A1 relates to a robotic mower sensor assembly for detecting a boundary wire signal. The sensor assembly includes a plurality of analog inductive sensors with a first inductive sensor oriented along a first axis (Z) and a second inductive sensor oriented along a second, different axis (X). EP 1025472 B1 discloses an electronic bordering system for a working tool, in which a border cable is placed above, under or on ground or floor, so that it separates an inner area within the border cable from an outer area. The working tool is preferably intended for attendance of ground or floor, such as grass-cutting.

Accordingly, the present invention is directed to a lawn mower robot and a control method thereof that substantially obviate one or more problems due to limitations and disadvantages of the related art.

An object of the present invention is to provide a lawn mower robot and a method of controlling the same.

This object is achieved with the features of the independent claims. The dependent claims relate to aspect of the invention.

Another object of the present invention is to provide a lawn mower robot which may accurately measure a distance between a main body and a boundary wire and a control method thereof.

Another object of the present invention is to provide a lawn mower robot which may improve convenience in installation of a boundary wire and a control method thereof.

Yet another object of the present invention is to provide a lawn mower robot which may determine a distance between a boundary wire and a main body under the condition that the main body is located within a closed loop formed by the boundary wire and a control method thereof.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a lawn mower robot includes a boundary indication unit including a boundary wire defining a work area and a main body moving within the work area defined by the boundary wire, wherein the main body includes sensing units sensing voltage values induced by the boundary wire and a controller determining a distance between the main body and the boundary wire from the voltage values sensed by the sensing units, wherein each of the sensing units includes at least two coils differently installed and the two coils respectively sense voltage values within the same area defined by the boundary wire.

The two coils may sense voltage values within a closed loop formed by the boundary wire.

Each of the sensing units may include a first coil installed to be wound in the forward direction of the main body and a second coil installed to be wound in the sideward direction of the main body.

The controller may determine the distance by summing the voltage values sensed by the first coil and the second coil.

The controller may maintain the distance between the main body and the boundary wire so that the sum of the voltage values sensed by the first coil and the second soil is regularly maintained.

The winding directions of the first coil and the second coil may be perpendicular to each other.

Each of the sensing units may further include a third coil installed to be wound in the upward direction of the main body.

The third coil may sense whether or not the main body is present within the work area.

Each of the sensing units may include a first vertical coil installed to be wound in the upward direction of the main body and a second vertical coil provided at a different position from the first vertical coil and installed to be wound in parallel with the first vertical coil.

The controller may determine the distance by comparing the voltage values sensed by the first vertical coil and the second vertical coil.

The controller may maintain the distance between the main body and the boundary wire so that the voltage values sensed by the first vertical coil and the second vertical coil are equal or similar to each other.

The sensing units are installed at the left and right sides of the main body, and the controller may determine the distance between the boundary wire and the main body by selecting the voltage values sensed by the sensing unit relatively close to the boundary wire among the sensing units installed at the left and right sides of the main body.

The controller may select the voltage values sensed by the sensing unit installed at the right side of the main body when the main body moves in the counterclockwise direction, and select the voltage values sensed by the sensing unit installed at the left side of the main body when the main body moves in the clockwise direction.

The boundary wire may be disposed at the outer wall of the work area.

The lawn mower robot may further include a drive unit adjusting an interval between the main body and the boundary wire according to the distance determined by the controller.

In another aspect of the present invention, a control method of a lawn mower robot includes sensing voltage values induced by a boundary wire defining a work area through sensing units, each of which includes a plurality of coils, and determining a distance between the boundary wire and the work area using the voltage values sensed by the plurality of coils, wherein the plurality of coils respectively senses voltage values under the condition that the plurality of coils is disposed within the work area, and the plurality of coils is differently installed.

In the determining the distance, the voltage values sensed by the plurality of coils may be summed and the distance is determined using the sum of the voltage values.

The control method may further include maintaining the distance between the boundary wire and the main body so that the sum of the voltage values is regularly maintained.

In the determining the distance, the distance may be determined by comparing the voltage values sensed by the plurality of coils.

The control method may further include maintaining the distance between the boundary wire and the main body so that the two voltage values are maintained equal.

It is to be understood that both the foregoing general description and the following detailed description of the present invention are exemplary and explanatory and are intended to provide further explanation of the invention as claimed.

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a top view of a main body of a lawn mower robot in accordance with one embodiment of the present invention;
FIG. 2 is a block diagram of FIG. 1;
FIG. 3 is a view illustrating sensing units in accordance with one embodiment of the present invention;
FIG. 4 is a view illustrating a sensing method using the sensing unit of FIG. 3;
FIG. 5 is a view illustrating a method of summing sensed voltage values;
FIG. 6 is a view illustrating sensing units in accordance with another embodiment of the present invention;
FIG. 7 is a view illustrating a sensing method using the sensing units of FIG. 6;
FIG. 8 is a view illustrating a method of comparing sensed voltage values;
FIGs. 9(a) and 9(b) are views, each of which illustrates driving of a lawn mower robot in accordance with one embodiment of the present invention;
FIG. 10 is a flowchart illustrating a control method of a lawn mower robot in accordance with one embodiment of the present invention; and
FIG. 11(a) and 11(b) are schematic diagrams, each of which illustrates connection structures of a sensing unit.

Reference will now be made in detail to the preferred embodiments of the present invention, examples of which are illustrated in the accompanying drawings.

In the drawings, the sizes or shapes of elements may be exaggerated for clarity and convenience of description. Further, terms specially defined in the following description in consideration of the configuration and functions of the present invention may be changed according to the intention of a user or an operator or a usual practice. The definitions of these terms should be determined based on the whole content of this specification.

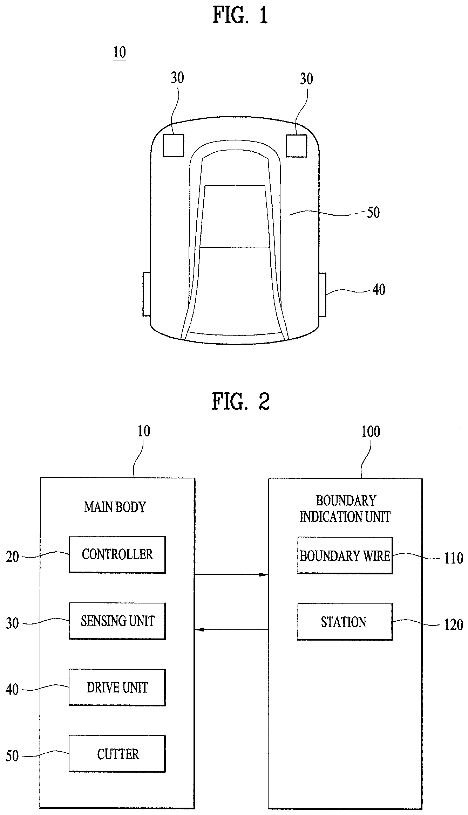

FIG. 1 is a top view of a main body of a lawn mower robot in accordance with one embodiment of the present invention and FIG. 2 is a block diagram of FIG. 1.

The lawn mower robot may include a main body 10 movably provided so as to cut lawn and a boundary indication unit 100 defining a work area in which the main body 10 moves to conduct operation.

The boundary indication unit 100 may include a boundary wire 110 forming the boundary of the work area and a station 120 supplying current to the boundary wire 110. That is, the boundary wire 110 may be connected to the station 120 and generate electromagnetic waves due to current supplied from the station 120. Further, the boundary wire 110 may be connected to the station 120 and thus, the main body 10 may be charged.

A cutter 50 cutting lawn may be provided in the main body 10 of the lawn mower robot. The cutter 50 may be configured such that a sharp blade is rotatable.

A drive unit 40 which may move and rotate the main body 10 in a desired direction is provided in the main body 10. The drive unit 40 may include a plurality of rotatable wheels, and the respective wheels may be individually rotated and thus, the main body 10 may be rotated in a desired direction.

The main body 10 may include sensing units 30 sensing the boundary wire 110. The sensing units 30 may sense electromagnetic waves generated by current flowing in the boundary wire 110 and voltage values generated thereby and thus, acquire information regarding whether or not the main body 10 reaches the boundary wire 110, information regarding whether or not the main body 10 is present within a closed loop formed by the boundary wire 110, and information regarding whether or not the main body 10 travels along the boundary wire 110.

Further, the sensing units 30 may sense various pieces of information regarding the moving distance and moving velocity of the main body 10 and relative position change of the main body 10 according to movement.

The main body 10 may drive the drive unit 40 using information sensed by the sensing units 30. That is, the controller 20 may control driving of the main body 10 using information measured by the sensing units 30 and thus, drive the drive unit 40 so that the main body 10 may be located within the work area.

The main body 10 may include the sensing units 30 sensing voltage values induced by the boundary wire 110, and a controller 20 determining a distance between the main body 10 and the boundary wire 110 by the voltage values sensed by the sensing units 30.

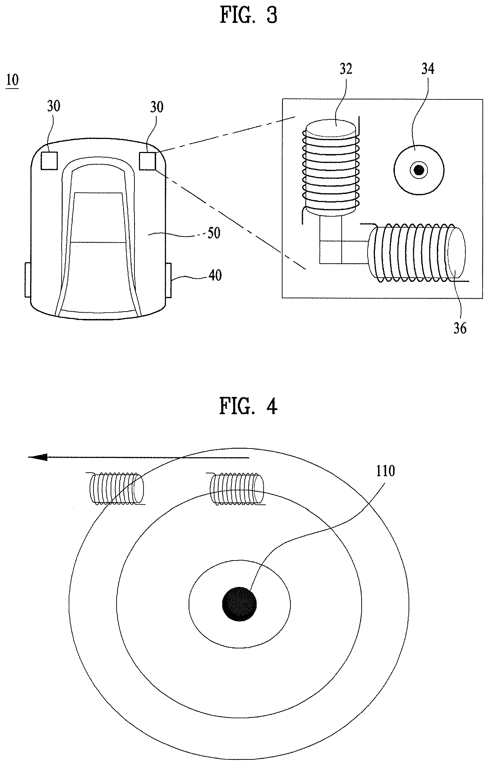

FIG. 3 is a view illustrating sensing units in accordance with one embodiment of the present invention. Hereinafter, the sensing units in accordance with this embodiment will be described with reference to FIG. 3.

The sensing unit 30 may include at least two coils which are differently installed, and the two coils may respectively sense voltage values within the same area defined by the boundary wire 110. That is, the two coils may sense voltage values within a closed loop formed by the boundary wire 110.

The sensing unit 30 may include a first coil 32 wound in the forward direction of the main body 10 and a second coil 36 wound in the sideward direction of the main body 10. Here, the first coil 32 and the second coil 36 may be arranged such that they are wound in perpendicular directions to each other.

The first coil 32 and the second coil 36 may be coplanar with each other in parallel with the ground surface of the work area when the main body 10 travels within the work area. However, the first coil 32 and the second coil 36 are arranged such that the central axes of the winding directions of the first coil 32 and the second coil 36 are perpendicular to each other.

The controller 20 may determine the distance by summing the voltage values sensed by the first coil 32 and the second coil 36.

Further, the sensing unit 30 may include a third coil 34 installed so as to be wound in the upward direction of the main body 10.

The first coil 32, the second coil 36, and the third coil 34 may be arranged so that the winding directions of first coil 32, the second coil 36, and the third coil 34 are perpendicular to one another. In more detail, the first coil 32, the second coil 36, and the third coil 34 may be arranged so that the central axes of the winding directions of first coil 32, the second coil 36, and the third coil 34 are perpendicular to one another. That is, three coils may be arranged such that three axes of the coils are perpendicular to one another.

The first coil 32 and the second coil 36 may perform a function of acquiring information regarding the distance between the boundary wire 110 and the main body 10 when the main body 10 travels within the work area.

The third coil 34 may perform a function of acquiring information as to whether or not the main body 10 is present at the inside or outside of the closed loop by the boundary wire 110, i.e., the work area. Since the third coil 34 is wound in the direction which is perpendicular both to the first coil 32 and the second coil 36 and is perpendicular to the lengthwise direction of the boundary wire 110 (i.e., perpendicular to the ground surface), the magnitude of voltage induced by the third coil 34 is smaller than the magnitudes of voltages induced by the first coil 32 and the second coil 36. Therefore, in accordance with one embodiment, in order to determine a distance between the main body 10 and the boundary wire 110, the third coil 34 is not used and voltage values acquired by the first coil 32 and the second coil 36 are used.

The sensing units 30 may be installed at the left and right sides of the main body 10. That is, the first coil 32, the second coil 36, and the third coil 34 may be arranged at each of the left and right sides of the main body 10. The controller 20 may select one of a signal, i.e., a voltage value, acquired through the sensing unit 30 installed at the left side of the main body 10 and a signal, i.e., a voltage value, acquired through the sensing unit 30 installed at the right side of the main body 10 and uses the selected one voltage value as data to determine the distance between the boundary wire 110 and the main body 10.

FIG. 4 is a view illustrating a sensing method using the sensing units of FIG. 3. Hereinafter, the sensing method will be described with reference to FIG. 4.

A coil shown in FIG. 4 is one of the first coil 32 and the second coil 36.

The intensity of a magnetic field generated by the boundary wire 110 varies according to positions of the sensing unit 30. That is, as the sensing unit 30 is more distant from the boundary wire 110, the sensing unit 30 and the magnetic field generated by the boundary wire 110 become perpendicular to each other (the winding direction of the coil and the direction of the magnetic field generated by the boundary wire become perpendicular to each other) and thus, the size of a sensed voltage value decreases. That is to say, the voltage value acquired by the sensing unit 30 increases as the sensing unit 30 becomes closer to the boundary wire 110 and decreases as the sensing unit 30 becomes more distant from the boundary wire 110.

On the other hand, as the sensing unit 30 is closer to the boundary wire 110, the sensing unit 30 and the magnetic field generated by the boundary wire 110 become parallel with each other (the winding direction of the coil and the direction of the magnetic field generated by the boundary wire become parallel with each other) and thus, the magnitude of a sensed voltage value increases.

For reference, in FIG. 4, a magnetic field around the boundary wire 110 is expressed by contour lines.

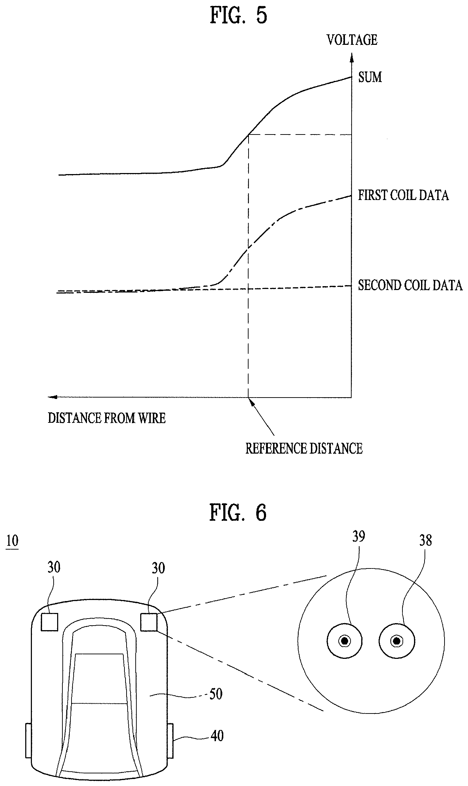

FIG. 5 is a view illustrating a method of summing sensed voltage values. Hereinafter, the method will be described with reference to FIG. 5.

In FIG. 5, the y-axis represents a voltage value and the x-axis represents a distance between the boundary wire 110 and the main body 10. In the y-axis, the voltage value increases in the upward direction. On the other hand, in the x-axis, the distance increases in the leftward direction.

As the distance between the main body 10 and the boundary wire 110 increases, voltage values sensed by the first coil 32 and the second coil 36 decrease.

That is, when the main body 10 becomes distant from the boundary wire 110 by a designated distance or more, the voltage value sensed by the first coil 32 and the voltage value sensed by the second coil 36 become equal.

Then, when the main body 10 becomes close to the boundary wire 110 by less than the designated distance, the voltage value sensed by the first coil 32 and the voltage value sensed by the second coil 36 are different. Here, the voltage values sensed by the first coil 32 and the second coil 36 may vary according to various factors, such as whether or not the front surface of the main body 10 faces the boundary wire 110 or whether or not the side surface of the main body 10 faces the boundary wire 110. That is, differently from FIG. 5, the data sensed by the first coil 32 and the data sensed by the second coil 36 may be reversed.

The controller 20 may adjust the distance between the main body 10 and the boundary wire 110 by summing the voltage value sensed by the first coil 32 and the voltage value sensed by the second coil 36.

For example, as exemplarily shown in FIG. 5, by summing the voltage value, i.e., 1.77V, sensed by the second coil 36 and the voltage value, i.e., 2.25V, sensed by the first coil 32, the controller 20 may adjust the distance between the main body 10 and the boundary wire 110 so that the sum of the voltage values is maintained at 4.02V.

A reference distance may be variously adjusted by a user or an operator. If a specific voltage value, for example, the voltage value sum corresponding to 4.02V, is sensed, the controller 20 may determine that the main body 10 and the boundary wire 110 are separated by the reference distance.

FIG. 6 is a view illustrating sensing units in accordance with another embodiment of the present invention. Hereinafter, the sensing units in accordance with this embodiment will be described with reference to FIG. 6.

Differently from the embodiment shown in FIG. 3, in this embodiment, the sensing unit 30 may include a first vertical coil 38 installed to be wound in the upward direction of the main body 10 and a second vertical coil 39 provided at a different position from the first vertical coil 38 and installed to be wound in parallel with the first vertical coil 38. That is, the winding directions of the first vertical coil 38 and the second vertical coil 39 are the same as each other and correspond to the upward direction of the main body 10 (the perpendicular direction to the ground surface).

That is, the sensing unit 30 may include two coils wound in the same direction, i.e., in the upward direction of the main body 10. Since the first vertical coil 38 and the second vertical coil 39 are installed at different positions, respective voltage values to the same boundary wire may be acquired.

Here, the sensing units 30 may be installed adjacent to the left and right corners of the main body 10.

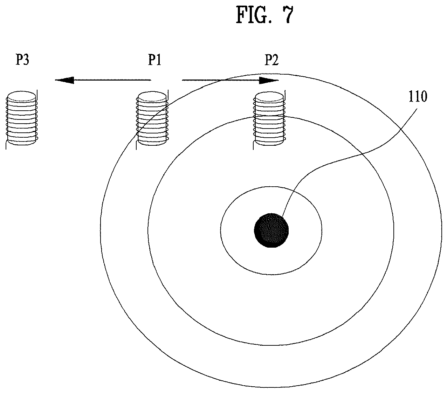

FIG. 7 is a view illustrating a sensing method using the sensing units of FIG. 6. Hereinafter, the sensing method will be described with reference to FIG. 7.

In the sensing method shown in FIG. 7, the installation type of the coils of the sensing unit 30 with respect to the boundary wire 110 is different from in the sensing method shown in FIG. 4. Therefore, change of the voltage values acquired by the sensing unit 30 is different.

As exemplarily shown by arrows in FIG. 7, as the first vertical coil 38 (or the second vertical coil 39; not shown) moves in the rightward direction, as shown in the rightward arrow, from position P1 to position P2 the sensing unit 30 becomes perpendicular to a magnetic field generated by the boundary wire 110 (the winding direction of the first vertical coil 38 (or the second vertical coil 39; not shown) becomes perpendicular to the magnetic field generated by the boundary wire 110) and thus, the voltage value sensed by the first vertical coil 38 of the second vertical coil 39 decreases.

On the other hand, as the first vertical coil 38 (or the second vertical coil 39; not shown) moves in the leftward direction, as shown in the leftward arrow, from position P1 to position P3 the sensing unit 30 (the first vertical coil 38 or the second vertical coil 39) becomes distant from the magnetic field generated by the boundary wire 110 and a sensing signal of the magnetic field generated by the boundary wire 110 becomes weak and thus, the voltage value sensed by the first vertical coil 38 of the second vertical coil 39 decreases.

That is, when the first vertical coil 38 (or the second vertical coil 39; not shown) is located at position PI, i.e. at the center between the two arrows, the first vertical coil 38 (or the second vertical coil 39; not shown) is relatively close to the magnetic field generated by the boundary wire 110 and greatly influenced by the magnetic field generated by the boundary wire 110 and thus, the voltage value sensed by the first vertical coil 38 or the second vertical coil 39 is the greatest.

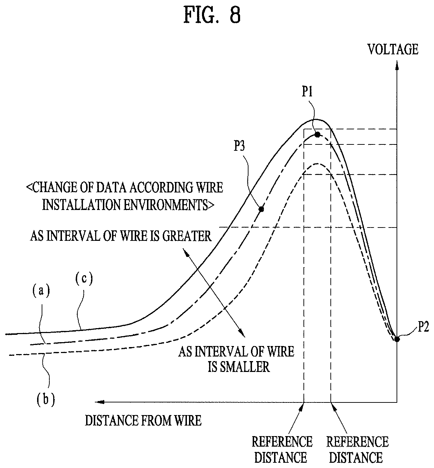

FIG. 8 is a view illustrating a method of comparing sensed voltage values. Hereinafter, the method will be described with reference to FIG. 8.

FIG. 8 comprises three curves (a), (b) and (c). The curve (a) (dashed dotted line) shows the relation between the voltage generated at the first vertical coil 38 or the second vertical coil 39 and the distance with respect to a horizontal direction to the boundary wire 110. As described with reference to FIG. 7 the voltage at the position P1 is at maximum. The voltage decreases in the direction to the position P2 which corresponds to the distance zero in FIG.8. The voltage also decreases in the other direction from P1 to P3.

FIG. 8 illustrates voltage values sensed by the sensing unit 30 in a state in which the interval of the boundary wire 110 is small (curve (b); dotted line) and voltage values sensed by the sensing unit 30 in a state in which the interval of the boundary wire 110 is wide (curve (c); solid line). Since the boundary wire 110 is disposed to draw a closed loop of the work area, an interval between parts of the boundary wire 110 may be narrow or wide according to the shape of the work area.

It may be understood that, regardless of the interval of the boundary wire 110, a distance between the main body 10 and the boundary wire 110 at which the voltage values sensed by the sensing unit 30 are the maximum may be regular. However, changes of the voltage values sensed by the sensing unit 30 are different.

In this embodiment, the sensing unit 30 includes two coils. That is, the first vertical coil 38 and the second vertical coil 39 have different distances from the boundary wire 110 and thus, the voltage values acquired by the first vertical coil 38 and the second vertical coil 39 are independent of each other.

The controller 20 may determine the distance between the main body 10 and the boundary wire 110 by comparing the voltage value sensed by the first vertical coil 38 and the voltage value sensed by the second vertical coil 39.

As exemplarily shown in FIG. 8, the distance between the main body 10 and the boundary wire 110 may be maintained so that the voltage values measured by the first vertical coil 38 and the second vertical coil 39 are equal or similar to each other.

That is, as the drive unit 40 moves the main body 10, the distance between the main body 10 and the boundary wire 110 at a position where the voltage values measured by the first vertical coil 38 and the second vertical coil 39 become equal or similar to each other may be regularly maintained.

The first vertical coil 38 and the second vertical coil 39 may be separated from each other by about 8 cm. That is, a distance between the central axes of the winding directions of the first vertical coil 38 and the second vertical coil 39 may be about 8 cm. This distance is only an example and can be set preferably to any value in the range of 1 cm to 20 cm more preferably 4 cm to 16 cm.

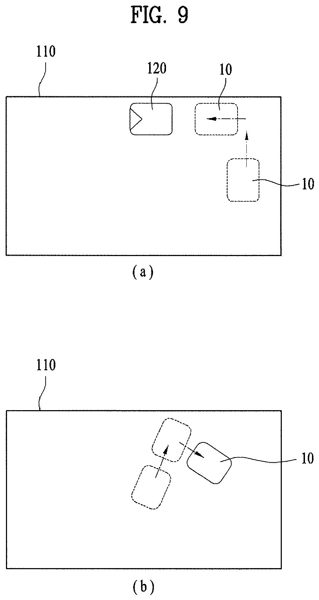

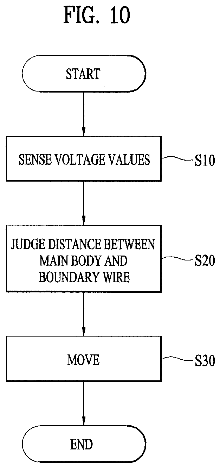

FIGs. 9(a) and 9(b) are views illustrating driving of a lawn mower robot in accordance with one embodiment of the present invention, and FIG. 10 is a flowchart illustrating a control method of a lawn mower robot in accordance with one embodiment of the present invention. In more detail, FIG. 9(a) is a view illustrating that the main body moves along the boundary wire and FIG. 9(b) is a view illustrating that the main body moves so as not to deviate from the work area when the main body approaches the boundary wire. Here, driving of the lawn mower robot will be described with reference to FIGs. 9(a), 9(b), and 10.

In FIG. 9(a), the main body 10 moves along the boundary wire 110.

That is, in one embodiment, the drive unit 40 may move the main body 10 while maintaining the distance between the main body 10 and the boundary wire 110 so that the voltage values sensed by the first coil 32 and the second coil 36 are regular.

In another embodiment, the drive unit 40 may move the main body 10 while maintaining the distance between the main body 10 and the boundary wire 110 so that the voltage values sensed by the first vertical coil 38 and the second vertical coil 39 are equal or similar to each other.

As exemplarily shown in FIG. 9(a), when the main body 10 moves in the counterclockwise direction within the work area, the sensing unit installed at the right side of the lawn mower robot is disposed closer to the boundary wire 110 than the sensing unit installed at the left side of the lawn mower robot. Therefore, the controller 20 may use the voltage value acquired by the sensing unit installed at the right side of the lawn mower robot. Since the sensing unit installed at the right side of the lawn mower robot has a greater voltage value than the sensing unit installed at the left side of the lawn mower robot, the controller 20 may select data of the sensing unit having a relatively large voltage value.

On the other hand, when the main body 10 moves in the clockwise direction within the work area, the sensing unit installed at the left side of the lawn mower robot is disposed closer to the boundary wire 110 than the sensing unit installed at the right side of the lawn mower robot. Therefore, the controller 20 may use the voltage value acquired by the sensing unit installed at the left side of the lawn mower robot.

As exemplarily shown in FIG. 10, when the main body 10 travels within the work area, voltage values may be acquired through the sensing units 30 (Operation S10).

Here, the controller 20 may determine a distance between the main body 10 and the boundary wire 110 by summing voltage values acquired by the two coils of the sensing unit 30 or comparing the sizes of voltage values acquired by the two coils of the sensing unit 30 according to embodiments (Operation S20).

When a corresponding condition is satisfied, the controller 20 may determines whether or not the distance between the main body 10 and the boundary wire 110 reaches a desired distance.

The controller 20 may drive the drive unit 30 according to the determined information and thus move the main body 10 (Operation S30).

For example, if the controller 20 determines that an acquired voltage value is not a desired voltage value, the controller 20 may move the main body 10 toward the boundary wire 110 or away from the boundary wire 110.

In the present invention, since the plural coils respectively acquire individual voltage values under the condition that plural coils are present within a closed loop formed by the boundary wire 110, although the main body 10 moves to the outer area of the boundary wire 110, the distance between the main body 10 and the boundary wire 110 may be determined.

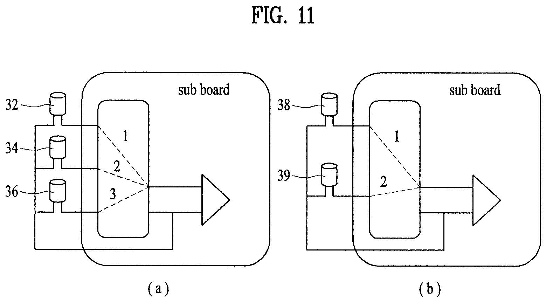

In FIG. 11(a), signals (voltage values) can be transferred from the first coil 32, the second coil 36 and the third coil 34. In FIG. 11(b), signals (voltage values) can be transferred from the first vertical coil 38 and the second vertical coil 39. One output terminal can be connected with two or three coils by mux (multiplex circuit) and one output terminal can be installed on one sub board.

The controller 20 can connect to one of the coils selectively with a predetermined time period (for example, 40 msec) by sequentially switching. Hereat, the output terminal may be connected with one of coils, electrically. Therefore, the controller 20 may receive signals from a plurality of coils sequentially. In addition, the main body 10 may have only two sub board since one sub board may be connected with a plurality of coils. One sub board may be installed to the left side of the main body and the right side of the main body. Therefore, a space may be saved in the main body.

As apparent from the above description, a lawn mower robot in accordance with one embodiment of the present invention may accurately acquire distance information between a main body and a boundary wire. Therefore, when the main body travels along the boundary wire, the traveling trajectory of the main body may be stably maintained.

Further, in the lawn mower robot in accordance with the embodiment of the present invention, the boundary wire is installed along the outer wall of the work area and thus, a user may easily install the boundary wire.

Further, in the lawn mower robot in accordance with the embodiment of the present invention, since the main body determines a distance between the boundary wire and the main body under the condition that the main body is located within a closed loop formed by the boundary wire, the main body does not need to get out of the closed loop.

## Claims

1. A lawn mower robot being operated in a work area defined by a boundary indication unit (100) including a boundary wire (110); and comprising:
a main body (10) configured to move within the work area defined by the boundary wire (110),
wherein the main body (10) includes:
sensing units (30) configured to sense voltage values induced by the boundary wire (110); and
a controller (20) configured to determine a distance between the main body (10) and the boundary wire (110) from the voltage values sensed by the sensing units (30), wherein:
each sensing unit (30) includes at least two coils differently installed; and
the two coils respectively are configured to sense voltage values within the same area defined by the boundary wire; (110) and
the sensing units (30) are installed at each of the left and right sides of the main body (10); and
the controller (20) is configured to determine the distance between the boundary wire (110) and the main body (10) by selecting the voltage values sensed by the sensing unit (30) relatively close to the boundary wire (110) among the sensing units (30) installed at the left and right sides of the main body (10).

2. The lawn mower robot according to claim 1, wherein the two coils are configured to sense voltage values within a closed loop formed by the boundary wire (110).

3. The lawn mower robot according to claim 1 or 2, wherein each sensing unit (30) includes:
a first coil (32) installed to be wound in the forward direction of the main body (10); and
a second coil (36) installed to be wound in the sideward direction of the main body (10).

4. The lawn mower robot according to claim 3, wherein the controller (20) is configured to determine the distance by summing the voltage values sensed by the first coil (32)and the second coil (36).

5. The lawn mower robot according to claim 4, wherein the controller (20) is configured to maintain the distance between the main body (10) and the boundary wire (110) so that the sum of the voltage values sensed by the first coil (32) and the second coil (36) is regularly maintained.

6. The lawn mower robot according to any of claims 3 to 5, wherein the winding directions of the first coil (32) and the second coil (36) are perpendicular to each other.

7. The lawn mower robot according to any of claims 3 to 6, wherein each of the sensing units (30) further includes a third coil (34) installed to be wound in the upward direction of the main body (10).

8. The lawn mower robot according to claim 7, wherein the third coil (34) is configured to sense whether or not the main body (10) is present within the work area.

9. The lawn mower robot according to one of claims 1 to 8, wherein each sensing unit (30) includes:
a first vertical coil (38) installed to be wound in the upward direction of the main body (10); and
a second vertical coil (39) provided at a different position from the first vertical coil (38) and installed to be wound in parallel with the first vertical coil (38).

10. The lawn mower robot according to claim 9, wherein the controller (20) is configured to determine the distance by comparing the voltage values sensed by the first vertical coil (38) and the second vertical coil (39).

11. The lawn mower robot according to claim 10, wherein the controller (20) is configured to maintain the distance between the main body (10) and the boundary wire (110) so that the voltage values sensed by the first vertical coil (38) and the second vertical coil (39) are equal or similar to each other.

12. The lawn mower robot according to any of claims 1 to 11, wherein the controller (20) is configured to select the voltage values sensed by the sensing units (30) installed at the right side of the main body (10) when the main body (10) moves in the counterclockwise direction, and is configured to select the voltage values sensed by the sensing units (30) installed at the left side of the main body (10) when the main body (10) moves in the clockwise direction.

13. The lawn mower robot according to any of claims 1 to 12, wherein the boundary wire (110) is disposed at the outer wall of the work area.

14. The lawn mower robot according to any of claims 1 to 13, further comprising a drive unit (40) configured to adjust an interval between the main body (10) and the boundary wire (110) according to the distance determined by the controller (20).

15. The lawn mower robot according to any of claims 1 to 14, wherein the controller (20) is configured to connect or disconnect to any one of said coils electrically, and configured to receive voltage values from a plurality of coils sequentially.

16. A control method of a lawn mower robot comprising:
sensing voltage values induced by a boundary wire (110) defining a work area through sensing units (30), each of which includes at least two coils; and
selecting the voltage values sensed by the sensing units (30) relatively close to the boundary wire (110) among the sensing units (30) installed at the left and right sides of the main body (10); and
determining a distance between the boundary wire (110) and the work area using the voltage values sensed by the at least two coils, wherein:
the at least two coils respectively sense voltage values under the condition that the at least two coils are disposed within the work area; and
the at least two coils are differently installed.

17. The control method according to claim 16, wherein, in the determining the distance, the voltage values sensed by the at least two coils are summed and the distance is determined by using the sum of the voltage values.

18. The control method according to claim 17, further comprising maintaining the distance between the boundary wire (110) and the main body (10) so that the sum of the voltage values is regularly maintained.

19. The control method according to any of claims 16 to 18, wherein, in the determining the distance, the distance is determined by comparing the voltage values sensed by the at least two coils.

20. The control method according to claim 19, further comprising maintaining the distance between the boundary wire (110) and the main body (10) so that the two voltage values are maintained equal.

21. The control method according to any of claims 16 to 20, wherein, in the sensing voltage values, the voltage values are sensed from a plurality of coils sequentially.

22. A system comprising a lawn mower robot according to any of claims 1 to 15 and a boundary indication unit (100) comprising a boundary wire (110) defining a work area.

## Patentansprüche

1. Rasenmäherroboter, der in einem Arbeitsbereich betrieben wird, der durch eine Begrenzungsanzeigeeinheit (100) mit einem Begrenzungsdraht (110) definiert ist; und mit:
einem Hauptkörper (10), der dafür konfiguriert ist, sich innerhalb des durch den Begrenzungsdraht (110) definierten Arbeitsbereichs zu bewegen,
wobei der Hauptkörper (10) aufweist:
Erfassungseinheiten (30), die dafür konfiguriert sind, durch den Begrenzungsdraht (110) induzierte Spannungswerte zu erfassen; und
eine Steuereinheit (20), die dafür konfiguriert ist, einen Abstand zwischen dem Hauptkörper (10) und dem Begrenzungsdraht (110) aus den durch die Erfassungseinheiten (30) erfassten Spannungswerten zu bestimmen, wobei:
jede Erfassungseinheit (30) mindestens zwei Spulen aufweist, die unterschiedlich installiert sind,
die beiden Spulen jeweils dafür konfiguriert sind, Spannungswerte innerhalb desselben durch den Begrenzungsdraht (110) definierten Bereichs zu erfassen,
die Erfassungseinheiten (30) an der linken und an der rechten Seite des Hauptkörpers (10) installiert sind, und
die Steuereinheit (20) dafür konfiguriert ist, den Abstand zwischen dem Begrenzungsdraht (110) und dem Hauptkörper (10) durch Auswählen der Spannungswerte zu bestimmen, welche durch die Erfassungseinheit (30) relativ nahe am Begrenzungsdraht (110) unter den Erfassungseinheiten (30) erfasst werden, die an der linken und der rechten Seite des Hauptkörpers (10) installiert sind.

2. Rasenmäherroboter nach Anspruch 1, wobei die zwei Spulen dafür konfiguriert sind, die Spannungswerte innerhalb einer durch den Begrenzungsdraht (110) gebildeten geschlossenen Schleife zu erfassen.

3. Rasenmäherroboter nach Anspruch 1 oder 2, wobei jede Erfassungseinheit (30) aufweist:
eine erste Spule (32), die derart installiert ist, dass ihre Wicklungsrichtung sich in der Vorwärtsrichtung des Hauptkörpers (10) erstreckt; und
eine zweite Spule (36), die derart installiert ist, dass ihre Wicklungsrichtung sich in der Seitenrichtung des Hauptkörpers (10) erstreckt.

4. Rasenmäherroboter nach Anspruch 3, wobei die Steuereinheit (20) dafür konfiguriert ist, den Abstand durch Summieren der durch die erste Spule (32) und die zweite Spule (36) erfassten Spannungswerte zu bestimmen.

5. Rasenmäherroboter nach Anspruch 4, wobei die Steuereinheit (20) dafür konfiguriert ist, den Abstand zwischen dem Hauptkörper (10) und dem Begrenzungsdraht (110) derart beizubehalten, dass die Summe der durch die erste Spule (32) und die zweite Spule (36) erfassten Spannungswerte regelmäßig beibehalten wird.

6. Rasenmäherroboter nach einem der Ansprüche 3 bis 5, wobei die Wicklungsrichtungen der ersten Spule (32) und der zweiten Spule (36) sich senkrecht zueinander erstrecken.

7. Rasenmäherroboter nach einem der Ansprüche 3 bis 6, wobei jede der Erfassungseinheiten (30) ferner eine dritte Spule (34) aufweist, die derart installiert ist, dass ihre Wicklungsrichtung sich in der Aufwärtsrichtung des Hauptkörpers (10) erstreckt.

8. Rasenmäherroboter nach Anspruch 7, wobei die dritte Spule (34) dafür konfiguriert ist, zu erfassen, ob sich der Hauptkörper (10) innerhalb des Arbeitsbereichs befindet oder nicht.

9. Rasenmäherroboter nach einem der Ansprüche 1 bis 8, wobei jede Erfassungseinheit (30) aufweist:
eine erste vertikale Spule (38), die derart installiert ist, dass ihre Wicklungsrichtung sich in der Aufwärtsrichtung des Hauptkörpers (10) erstreckt; und
eine zweite vertikale Spule (39), die an einer Position angeordnet ist, die von der Position der ersten vertikalen Spule (38) verschieden ist, und die derart installiert ist, dass ihre Wicklungsrichtung sich parallel zur Wicklungsrichtung der ersten vertikalen Spule (38) erstreckt.

10. Rasenmäherroboter nach Anspruch 9, wobei die Steuereinheit (20) dafür konfiguriert ist, den Abstand durch Vergleichen der durch die erste vertikale Spule (38) und die zweite vertikale Spule (39) erfassten Spannungswerte zu bestimmen.

11. Rasenmäherroboter nach Anspruch 10, wobei die Steuereinheit (20) dafür konfiguriert ist, den Abstand zwischen dem Hauptkörper (10) und dem Begrenzungsdraht (110) beizubehalten, so dass die durch die erste vertikale Spule (38) und die zweite vertikale Spule (39) erfassten Spannungswerte gleich oder ähnlich sind.

12. Rasenmäherroboter nach einem der Ansprüche 1 bis 11, wobei die Steuereinheit (20) dafür konfiguriert ist, die Spannungswerte auszuwählen, die durch die an der rechten Seite des Hauptkörpers (10) installierten Erfassungseinheiten (30) erfasst werden, wenn sich der Hauptkörper (10) im Gegenuhrzeigersinn bewegt, und dafür konfiguriert ist, die Spannungswerte auszuwählen, die durch die an der linken Seite des Hauptkörpers (10) installierten Erfassungseinheiten (30) erfasst werden, wenn sich der Hauptkörper (10) im Uhrzeigersinn bewegt.

13. Rasenmäherroboter nach einem der Ansprüche 1 bis 12, wobei der Begrenzungsdraht (110) an der Außenwand des Arbeitsbereichs angeordnet ist.

14. Rasenmäherroboter nach einem der Ansprüche 1 bis 13 ferner mit einer Antriebseinheit (40), die dafür konfiguriert ist, ein Intervall zwischen dem Hauptkörper (10) und dem Begrenzungsdraht (110) gemäß dem durch die Steuereinheit (20) bestimmten Abstand einzustellen.

15. Rasenmäherroboter nach einem der Ansprüche 1 bis 14, wobei die Steuereinheit (20) dafür konfiguriert ist, mit einer der Spulen elektrisch verbunden oder davon getrennt zu werden, und dafür konfiguriert ist, Spannungswerte von mehreren Spulen sequentiell zu empfangen.

16. Steuerverfahren für einen Rasenmäherroboter, mit den Schritten:
Erfassen von Spannungswerten, die durch einen Begrenzungsdraht (110) induziert werden, der einen Arbeitsbereich definiert, durch Erfassungseinheiten (30), die jeweils mindestens zwei Spulen aufweisen; und
Auswählen der Spannungswerte, die durch die Erfassungseinheiten (30) relativ nahe am Begrenzungsdraht (110) unter den Erfassungseinheiten (30) erfasst werden, die an der linken und an der rechten Seite des Hauptkörpers (10) installiert sind; und
Bestimmen eines Abstands zwischen dem Begrenzungsdraht (110) und dem Arbeitsbereich unter Verwendung der durch die mindestens zwei Spulen erfassten Spannungswerte, wobei:
die mindestens zwei Spulen jeweils Spannungswerte unter der Bedingung erfassen, dass die mindestens zwei Spulen innerhalb des Arbeitsbereichs angeordnet sind, und
wobei die mindestens zwei Spulen unterschiedlich installiert sind.

17. Steuerverfahren nach Anspruch 16, wobei bei der Abstandsbestimmung die durch die mindestens zwei Spulen erfassten Spannungswerte summiert werden und der Abstand aus der Summe der Spannungswerte bestimmt wird.

18. Steuerverfahren nach Anspruch 17, ferner mit dem Beibehalten des Abstands zwischen dem Begrenzungsdraht (110) und dem Hauptkörper (10), so dass die Summe der Spannungswerte regelmäßig beibehalten wird.

19. Steuerverfahren nach einem der Ansprüche 16 bis 18, wobei bei der Abstandsbestimmung der Abstand durch Vergleichen der durch die mindestens zwei Spulen erfassten Spannungswerte bestimmt wird.

20. Steuerverfahren nach Anspruch 19, ferner mit dem Beibehalten des Abstands zwischen dem Begrenzungsdraht (110) und dem Hauptkörper (10), so dass die beiden Spannungswerte gleich bleiben.

21. Steuerverfahren nach einem der Ansprüche 16 bis 20, wobei beim Erfassen von Spannungswerten die Spannungswerte von mehreren Spulen sequentiell erfasst werden.

22. System mit einem Rasenmäherroboter nach einem der Ansprüche 1 bis 15 und mit einer Begrenzungsanzeigeeinheit (100), die einen Begrenzungsdraht (110) aufweist, der einen Arbeitsbereich definiert.

## Revendications

1. Robot pour tondre le gazon utilisé dans une zone de travail définie par une unité d'indication de périphérie (100) incluant un câble périphérique (110) ; et comprenant :
un corps principal (10) configuré pour se déplacer dans la zone de travail définie par le câble périphérique (110),
dans lequel le corps principal (10) inclut :
des unités de détection (30) configurées pour détecter des valeurs de tension induites par le câble périphérique (110) ; et
un dispositif de commande (20) configuré pour déterminer une distance entre le corps principal (10) et le câble périphérique (110) à partir des valeurs de tension détectées par les unités de détection (30), dans lequel :
chaque unité de détection (30) inclut au moins deux bobines installées différemment ; et
les deux bobines sont configurées respectivement pour détecter des valeurs de tension dans la même zone définie par le câble périphérique (110) ; et
les unités de détection (30) sont installées de chacun des côtés gauche et droit du corps principal (10) ; et
le dispositif de commande (20) est configuré pour déterminer la distance entre le câble périphérique (110) et le corps principal (10) en sélectionnant les valeurs de tension détectées par l'unité de détection (30) relativement proche du câble périphérique (110) parmi les unités de détection (30) installées des côtés gauche et droit du corps principal (10).

2. Robot pour tondre le gazon selon la revendication 1, dans lequel les deux bobines sont configurées pour détecter des valeurs de tension dans une boucle fermée formée par le câble périphérique (110).

3. Robot pour tondre le gazon selon la revendication 1 ou 2, dans lequel chaque unité de détection (30) inclut :
une première bobine (32) installée pour être enroulée dans la direction vers l'avant du corps principal (10) ; et
une deuxième bobine (36) installée pour être enroulée dans la direction vers le côté du corps principal (10).

4. Robot pour tondre le gazon selon la revendication 3, dans lequel le dispositif de commande (20) est configuré pour déterminer la distance en additionnant les valeurs de tension détectées par la première bobine (32) et la deuxième bobine (36).

5. Robot pour tondre le gazon selon la revendication 4, dans lequel le dispositif de commande (20) est configuré pour maintenir la distance entre le corps principal (10) et le câble périphérique (110) de sorte que la somme des valeurs de tension détectées par la première bobine (32) et la deuxième bobine (36) soit régulièrement maintenue.

6. Robot pour tondre le gazon selon l'une quelconque des revendications 3 à 5, dans lequel les directions d'enroulement de la première bobine (32) et de la deuxième bobine (36) sont perpendiculaires l'une à l'autre.

7. Robot pour tondre le gazon selon l'une quelconque des revendications 3 à 6, dans lequel chacune des unités de détection (30) inclut en outre une troisième bobine (34) installée pour être enroulée dans la direction vers le haut du corps principal (10).

8. Robot pour tondre le gazon selon la revendication 7, dans lequel la troisième bobine (34) est configurée pour détecter si le corps principal (10) est présent ou non dans la zone de travail.

9. Robot pour tondre le gazon selon l'une des revendications 1 à 8, dans lequel chaque unité de détection (30) inclut :
une première bobine verticale (38) installée pour être enroulée dans la direction vers le haut du corps principal (10) ; et
une seconde bobine verticale (39) fournie à une position différente de la première bobine verticale (38) et installée pour être enroulée en parallèle avec la première bobine verticale (38).

10. Robot pour tondre le gazon selon la revendication 9, dans lequel le dispositif de commande (20) est configuré pour déterminer la distance en comparant les valeurs de tension détectées par la première bobine verticale (38) et la seconde bobine verticale (39).

11. Robot pour tondre le gazon selon la revendication 10, dans lequel le dispositif de commande (20) est configuré pour maintenir la distance entre le corps principal (10) et le câble périphérique (110) de sorte que les valeurs de tension détectées par la première bobine verticale (38) et la seconde bobine verticale (39) soient égales ou semblables les unes aux autres.

12. Robot pour tondre le gazon selon l'une quelconque des revendications 1 à 11, dans lequel le dispositif de commande (20) est configuré pour sélectionner les valeurs de tension détectées par les unités de détection (30) installées du côté droit du corps principal (10) quand le corps principal (10) se déplace dans la direction inverse des aiguilles d'une montre, et est configuré pour sélectionner les valeurs de tension détectées par les unités de détection (30) installées du côté gauche du corps principal (10) quand le corps principal (10) se déplace dans la direction des aiguilles d'une montre.

13. Robot pour tondre le gazon selon l'une quelconque des revendications 1 à 12, dans lequel le câble périphérique (110) est disposé au niveau du mur extérieur de la zone de travail.

14. Robot pour tondre le gazon selon l'une quelconque des revendications 1 à 13, comprenant en outre une unité d'entraînement (40) configurée pour adapter un intervalle entre le corps principal (10) et le câble périphérique (110) en fonction de la distance déterminée par le dispositif de commande (20).

15. Robot pour tondre le gazon selon l'une quelconque des revendications 1 à 14, dans lequel le dispositif de commande (20) est configuré pour se connecter à ou se déconnecter de l'une quelconque desdites bobines électriquement, et configuré pour recevoir des valeurs de tension d'une pluralité de bobines successivement.

16. Procédé de commande d'un robot pour tondre le gazon comprenant :
la détection de valeurs de tension induites par un câble périphérique (110) définissant une zone de travail au moyen d'unités de détection (30), dont chacune inclut au moins deux bobines ; et
la sélection des valeurs de tension détectées par les unités de détection (30) relativement proches du câble périphérique (110) parmi les unités de détection (30) installées des côtés gauche et droit du corps principal (10) ; et
la détermination d'une distance entre le câble périphérique (110) et la zone de travail en utilisant les valeurs de tension détectées par les au moins deux bobines, dans lequel :
les au moins deux bobines détectent respectivement des valeurs de tension à la condition que les au moins deux bobines soient disposées dans la zone de travail ; et
les au moins deux bobines sont installées différemment.

17. Procédé de commande selon la revendication 16, dans lequel, dans la détermination de la distance, les valeurs de tension détectées par les au moins deux bobines sont additionnées et la distance est déterminée en utilisant la somme des valeurs de tension.

18. Procédé de commande selon la revendication 17, comprenant en outre le maintien de la distance entre le câble périphérique (110) et le corps principal (10) de sorte que la somme des valeurs de tension soit maintenue régulièrement.

19. Procédé de commande selon l'une quelconque des revendications 16 à 18, dans lequel, dans la détermination de la distance, la distance est déterminée en comparant les valeurs de tension détectées par les au moins deux bobines.

20. Procédé de commande selon la revendication 19, comprenant en outre le maintien de la distance entre le câble périphérique (110) et le corps principal (10) de sorte que les deux valeurs de tension soient maintenues égales.

21. Procédé de commande selon l'une quelconque des revendications 16 à 20, dans lequel, dans la détection de valeurs de tension, les valeurs de tension sont détectées par une pluralité de bobines successivement.

22. Système comprenant un robot pour tondre le gazon selon l'une quelconque des revendications 1 à 15 et une unité d'indication de périphérie (100) comprenant un câble périphérique (110) définissant une zone de travail.
